# EUROPEAN PATENT SPECIFICATION

(11) **EP 2 672 453 B1**
(45) Date of publication and mention of the grant of the patent: **10.10.2018**
(21) Application number: 13170630.1
(22) Date of filing: 05.06.2013
(51) Int. Cl.: G06T 7/00, G06T 19/00

(54) **Rendering program, rendering apparatus, and rendering method**
Wiedergabeprogramm, Wiedergabevorrichtung und Wiedergabeverfahren
Programme, appareil et procédé de rendu

(30) Priority: 08.06.2012 JP 2012131245
(43) Date of publication of application: 11.12.2013
(73) Proprietor: FUJITSU LIMITED, Kawasaki-shi, Kanagawa 211-8588 (JP); THE UNIVERSITY OF TOKYO, Tokyo 113-8654 (JP)
(72) Inventor: Watanabe, Masahiro, Kanagawa, 211-8588 (JP); Fuchikami, Satoshi, Fukuoka, 814-8589 (JP); Kadooka, Yoshimasa, Kanagawa, 211-8588 (JP); Hisada, Toshiaki, Tokyo, 113-8654 (JP); Sugiura, Seiryo, Tokyo, 113-8654 (JP); Washio, Takumi, Tokyo, 113-8654 (JP); Okada, Jun-ichi, Tokyo, 113-8654 (JP)
(74) Representative: Hoffmann Eitle

(56) References cited:
- US-A1- 2003 099 386
- US-B1- 6 694 163
- SIVEWRIGHT G J ET AL: "INTERACTIVE REGION AND VOLUME GROWING FOR SEGMENTING VOLUMES IN MR AND CT IMAGES", MEDICAL INFORMATICA, TAYLOR AND FRANCIS, BASINGSTOKE, GB, vol. 19, no. 1, 1994, pages 71-80, XP000603452, ISSN: 0307-7640
- DAY ELLEN ET AL: "A region growing method for tumor volume segmentation on PET images for rectal and anal cancer patients", MEDICAL PHYSICS, AIP, MELVILLE, NY, US, vol. 36, no. 10, 4 September 2009 (2009-09-04), pages 4349-4358, XP012129706, ISSN: 0094-2405, DOI: 10.1118/1.3213099

## Description

### FIELD

The embodiment discussed herein is related to a rendering program, a rendering apparatus, and a rendering method.

### BACKGROUND

The heart in humans and animals is an internal organs that pumps blood and this function of the heart is conventionally reproduced by numerical analysis. In the numerical analysis of the heart, myocardial infarction, which causes changes over time at an arbitrary area of the heart, is simulated. When changes of such an area are to be viewed, a technique of extracting data corresponding to the area of the heart can be used (see, for example, Kitware, Inc., vtkMarchingContourFilter Class Reference.pdf, Sep. 27, 2010, retrieved Mar. 12, 2012: [URL]www.vtk.org/doc/release/5.6/html/a01103.html).

Nonetheless, with the technique above, an allowable range of an upper limit and a lower limit of physical values, which are elements of an arbitrary area and are for workrate and pressure, are specified as a myocardial infarcted area by a user. The allowable range of the physical values identifying the myocardial infarcted area varies according to patient and consequently, specification of an allowable range for a myocardial infarction is difficult. Such a problem is not limited to the heart and is similar for other internal organs as well as other disorders other than myocardial infarctions.

SIVEWRIGHT G J ET AL: "INTERACTIVE REGION AND VOLUME GROWING FOR SEGMENTING VOLUMES IN MR AND CT IMAGES" (see MEDICAL INFORMATICA, TAYLOR AND FRANCIS, BASINGSTOKE, GB, vol. 19, no. 1, 1994, pages 71-80, XP000603452, ISSN:0307-7640) describes an interactive tool for outlining regions of interest in images, wherein a method has been applied to the task of defining three-dimensional (3D) volumes in conformal radiation treatment planning (RTP). The aim in RTP is to find an "optimal" configuration of beams that provides a tumorcidal dose distribution whilst sparing normal tissue. The region-growing method is applicable for those cases where there is a sufficient contrast-to-noise ratio to discriminate between adjacent anatomical structures. Thereby, the method includes setting an automatic threshold, marking four neighbors of a seed pixel with boundary identifiers, wherein any neighbors that are not already marked as region interiors or region boundaries are assigned as new boundaries and appended to a list, including a pixel of a given intensity in the region if a specific condition is satisfied, and imaging segmentation based on detecting connected pixels that have similar intensity values.

### SUMMARY

It is an object in one aspect of the embodiments to at least solve the above problems in the conventional technologies.

The invention relates to a rendering program, a rendering method and a rendering apparatus as defined in the appended claims. According to an aspect of an embodiment, a rendering program that renders simulation results and causes a computer to execute detecting a range of physical values of a rendering element group of elements that are to be rendered and are of an area specified in a simulation model that is a set of elements each having a physical value for each position to be simulated; identifying from the simulation model, an adjacent element group that is a set of elements adjacent to rendering elements included in the rendering element group; determining whether the physical value of each adjacent element included in the identified adjacent element group is within the range; adding to the rendering element group, an adjacent element for which the physical value has been determined to be included in the range, characterized in that the adding includes adding to the rendering element group, an element that contacts multiple elements in the rendering element group, the element being of an element group that is among the adjacent element group and determined to be outside the range; and rendering the simulation model according to the rendering element group to which the adjacent element has been added.

### BRIEF DESCRIPTION OF DRAWINGS

FIGs. 1A, 1B, 1C, and 1D are diagrams depicting a rendering example of a heart model by a rendering apparatus according to an embodiment;
FIG. 2 is a block diagram of a hardware configuration of the rendering apparatus according to the embodiment;
FIG. 3 is a block diagram of a functional configuration of the rendering apparatus according to the embodiment;
FIG. 4 is a diagram depicting a data structure example of a rendering element group;
FIG. 5 is a diagram depicting a tetra element ti depicted in FIG. 4;
FIG. 6 is a diagram depicting an example of a histogram;
FIG. 7 is a diagram depicting a data structure example of an adjacent element group;
FIG. 8 is a diagram depicting a data structure example of an additional element group;
FIG. 9 is a flowchart depicting an example of a rendering process performed by the rendering apparatus according to the embodiment; and
FIG. 10 is a flowchart of an example of an expansion process (step S907) depicted in FIG. 9.

### DESCRIPTION OF EMBODIMENTS

Preferred embodiments of a rendering program, a rendering apparatus, and a rendering method according to the present invention will be explained in detail with reference to the accompanying drawings. In the present embodiments, although description is given using a 3-dimensional model of a heart as one example of an internal organ, implementation may be by a 3-dimensional model of another internal organ other than the heart.

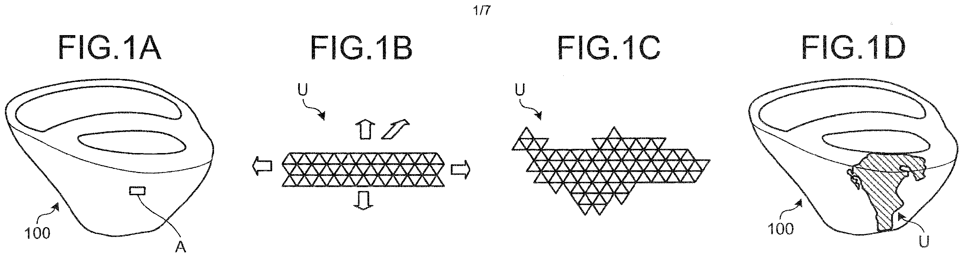

FIGs. 1A, 1B, 1C, and ID are diagrams depicting a rendering example of a heart model by a rendering apparatus according to an embodiment. Among FIGs. 1A, 1B, 1C, and 1D, FIG. A depicts a 3-dimensional model of a heart (hereinafter, "heart model"). A heart model 100, for example, is a set of tetrahedral elements (unstructured grid data) called tetra elements. Each tetra element has a physical value corresponding to the position of the tetra element. A physical value is a value indicative of the behavior of the cardiac muscle corresponding to the tetra element; and, for example, pressure [KPa], work [J/ml], workrate [J/s·ml] are adopted as physical values.

The rendering apparatus, consequent to manipulation of a pointing device by a user, specifies an area in the heart model 100. The specified area is referred to as a "specified area". For example, the rendering apparatus maps onto an external surface of the heart model 100, the rectangular area specified by the user and thereby, sets an external surface of heart model, corresponding to the rectangular area, to be a specified area A.

FIG. 1B is an enlarged view of the specified area A specified in FIG. 1A. The specified area A includes a tetra element group. The tetra element group within the specified area A is called a rendering element group U. In FIG. 1B, triangular shapes represent tetra elements. Although the tetra elements are tetrahedrons, herein, for the sake of convenience, each is regarded as a triangle. The rendering apparatus expands the specified area A in the proximal directions of the tetra elements, indicated by the arrows.

In this example, adjacent elements having physical values within an allowable range between upper and lower limits of the physical values of the initial rendering element group U in FIG. 1B, are included in the rendering element group U. Further, even adjacent elements outside the allowable range are included in the rendering element group U, under a given condition described hereinafter. FIG. 1C depicts the rendering element group U after expansion. The rendering element group U post-expansion is the area displaying a disorder, such as a myocardial infarction, that is to be viewed.

FIG. 1D is a rendering example of the heart model 100, characterizing the rendering element group U post-expansion depicted in FIG. 1C. In this manner, by merely specifying the specified area A as depicted in FIG. 1A, an area afflicted by a disorder, such as a myocardial infarction, that varies according to patient as well as according to the state of a patient can be easily identified.

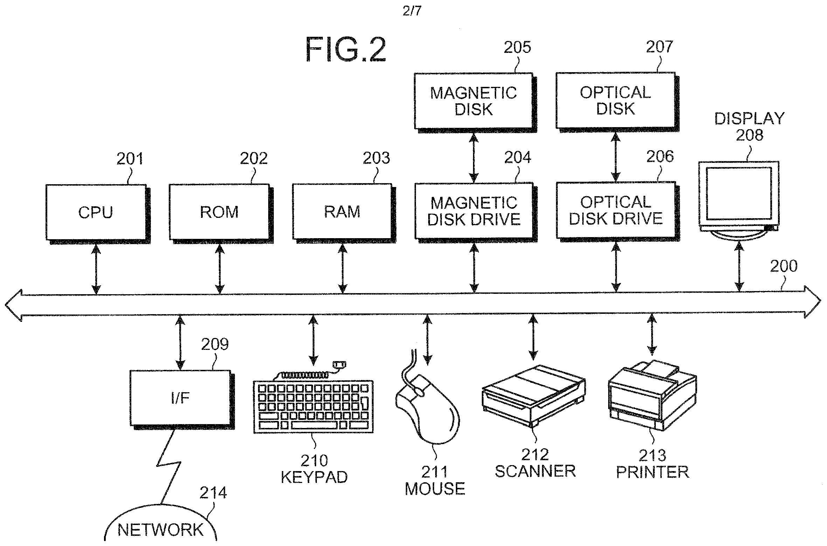

FIG. 2 is a block diagram of a hardware configuration of the rendering apparatus according to the embodiment. As depicted in FIG. 2, the rendering apparatus includes a central processing unit (CPU) 201, read-only memory (ROM) 202, random access memory (RAM) 203, a magnetic disk drive 204, a magnetic disk 205, an optical disk drive 206, an optical disk 207, a display 208, an interface (I/F) 209, a keypad 210, a mouse 211, a scanner 212, and a printer 213, respectively connected by a bus 200.

The CPU 201 governs overall control of the rendering apparatus. The ROM 202 stores various types of programs such as a boot program. The RAM 203 is used as a work area of the CPU 201. The magnetic disk drive 204, under the control of the CPU 201, controls the reading and writing of data with respect to the magnetic disk 205. The magnetic disk 205 stores data written thereto under the control of the magnetic disk drive 204.

The optical disk drive 206, under the control of the CPU 201, controls the reading and writing of data with respect to the optical disk 207. The optical disk 207 stores data written thereto through the optical disk drive 206, the data being read out through the optical disk drive 206 by a computer.

The display 208 displays, for example, data such as text, images, functional information, etc., in addition to a cursor, icons, and/or tool boxes. A liquid crystal display, a plasma display, etc., may be employed as the display 508.

The I/F 209 is connected to a network 214 such as a local area network (LAN), a wide area network (WAN), and the Internet through a communication line and is connected to other apparatuses through the network 214. The I/F 209 administers an internal interface with the network 214 and controls the input/output of data from/to external apparatuses. For example, a modem or a LAN adaptor may be employed as the I/F 209.

The keypad 210 includes, for example, keys for inputting letters, numerals, and various instructions and performs the input of data. Alternatively, a touch-panel-type input pad or numeric keypad, etc. may be adopted. The mouse 211 is used to move the cursor, select an allowable range, or move and change the size of windows. A track ball or a joy stick may be adopted provided each respectively has a function similar to a pointing device.

The scanner 212 optically reads an image into the rendering apparatus. The scanner 212 may have an optical character reader (OCR) function. The printer 213 prints image data and text data. The printer 213 may be, for example, a laser printer, an inkjet printer, and the like. Further, configuration may be such that at least any one among the optical disk drive 206, the optical disk 207, the display 208, the keypad 210, the mouse 211, the scanner 212, and the printer 213 is omitted.

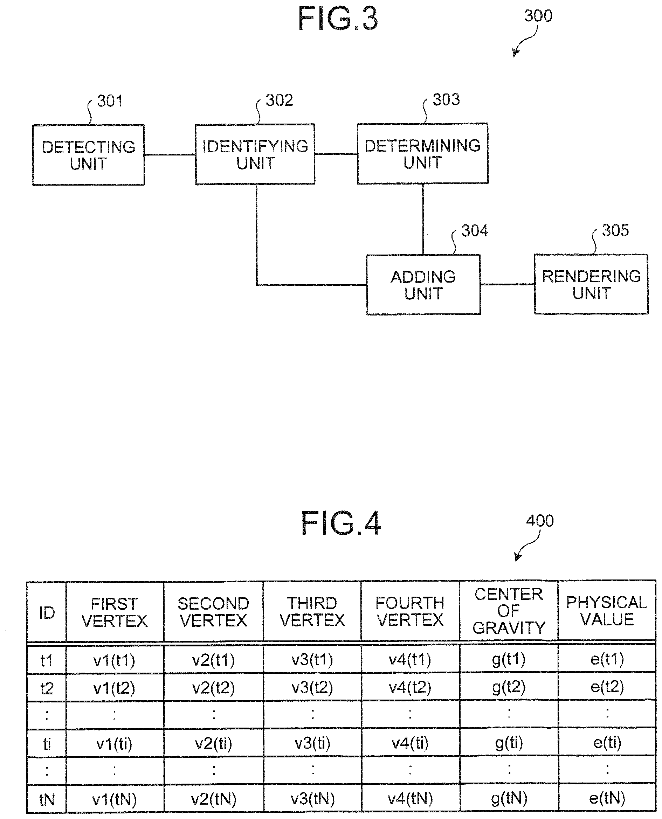

FIG. 3 is a block diagram of a functional configuration of the rendering apparatus according to the embodiment. A rendering apparatus 300 includes a detecting unit 301, an identifying unit 302, a determining unit 303, an adding unit 304, and a rendering unit 305. Functions of the detecting unit 301, the identifying unit 302, the determining unit 303, the adding unit 304, and the rendering unit 305 are, for example, implemented by executing on the CPU 201, a program stored in a storage device such as the ROM 202, the RAM 203, the magnetic disk 205, and the optical disk 207 depicted in FIG. 2, or by the I/F 209.

The detecting unit 301 detects for each position to be simulated and detects in a simulation model that is a set of elements respectively having a physical value, physical values of the rendering element group U, which is the specified area to be rendered. For example, the detecting unit 301 detects an allowable range of physical values of the rendering element group U within the specified area A in an internal organ model, which is a set of elements having physical values according to each position in the internal organ. The data structure of the rendering element group U within the specified area A in the internal organ model, for example, is a portion of the data structure of the tetra element group making up the heart model 100.

FIG. 4 is a diagram depicting a data structure example of the rendering element group U. A data structure 400 of the rendering element group U is a data structure having values respectively for an ID field, a first vertex field to a fourth vertex field, a center of gravity field, and a physical value field.

The ID field stores an ID of a tetra element within the specified area A, where ID: i (1≤i≤n). An ID is identifier information uniquely identifying a tetra element. A tetra element of the ID "i" is a tetra element ti. The first vertex field to the fourth vertex field store vertex coordinate values for the first vertex v1(ti) to the fourth vertex v4(ti) of the tetra element ti. For the sake of convenience, coordinate values are indicated as v1(ti) to v4(ti). The first vertex v1(ti) to the fourth vertex v4(ti) are respective vertices of a tetra element, which is a tetrahedron.

The center of gravity field stores center of gravity coordinate values for the center of gravity g(ti) of the tetra element ti. For the sake of convenience, the coordinate values will be indicated as g(ti). The physical value field stores a physical value e(ti) assigned to the tetra element ti. As described, a physical value is a value indicative of the behavior of the cardiac muscle corresponding to the tetra element; and, for example, pressure [KPa], work [J/ml], workrate [J/s·ml] are adopted as physical values.

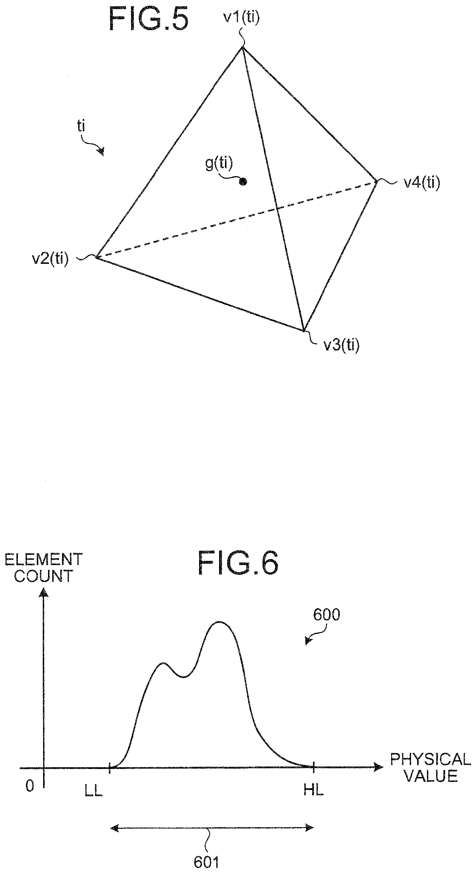

FIG. 5 is a diagram depicting the tetra element ti depicted in FIG. 4. The shape of the tetra element ti is a tetrahedron having the first vertex v1(ti) to the fourth vertex v4(ti). Further, at the center of gravity g(ti), a physical value e(ti) is assigned.

Reference of the description returns to FIG. 3. The detecting unit 301 extracts the physical values of the tetra elements of the rendering element group U within the specified area A as depicted in FIG. 1A. For example, the detecting unit 301 generates a histogram of the physical values that the tetra elements of the rendering element group U have and detects the upper and lower limit physical values.

FIG. 6 is a diagram depicting an example of a histogram. The detecting unit 301, for example, detects in a histogram 600, an allowable range 601 from an upper limit HL to a lower limit LL. Herein, the upper limit HL is the largest physical value and the lower limit LL is the smallest physical value. Further, the upper limit HL may be the largest physical value when the element count is greater than or equal to a given count. Similarly, the lower limit LL may be the smallest physical value when the element count is greater than or equal to the given count. Further, the allowable range 601 may be expanded by a preliminarily set allowance value. For example, when the allowable range 601 is [LL, HL] and an allowance value α(>0) is assumed, the allowable range 601 becomes [LL-α, HL+α].

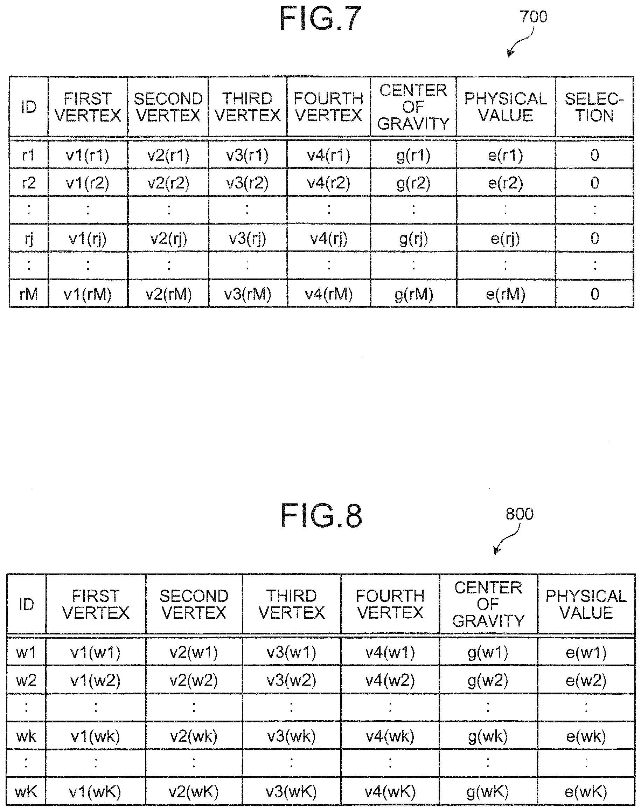

Reference of the description returns to FIG. 3. The identifying unit 302 identifies from the simulation model, an adjacent element group, which is a set of elements adjacent to the elements that are to be rendered and that are included in the rendering element group U. For example, the identifying unit 302 identifies from an internal organ model, an adjacent element group, which is a set of elements adjacent to the elements of the rendering element group U. For example, the identifying unit 302 identifies an adjacent element group from the heart model 100. An adjacent element is a tetra element that is adjacent to a given tetra element, such as a tetra element that is in contact with a face, edge, and/or vertex of the given tetra element. The identified adjacent element group is stored in the data structure depicted in FIG. 7, to a storage device.

FIG. 7 is a diagram depicting a data structure example of an adjacent element group. A data structure 700 of an adjacent element group is a data structure that in addition to the fields configuring the data structure 400 of the rendering element group U, further includes a selection field. Description of the fields identical to those configuring the data structure 400 of the rendering element group U will be omitted herein.

The selection field stores a selection flag indicating whether the adjacent element has been selected. Here, as an example, a value of "1" indicates that the adjacent element has been selected, and a value of "0" indicates that the adjacent element has not been selected. In FIG. 7, an initial state is depicted where all values are "0" indicating that no adjacent element has been selected yet.

Reference of the description returns to FIG. 3. The determining unit 303 determines whether the physical values of the adjacent elements included in the identified adjacent element group are with the range described above. For example, the determining unit 303 determines whether the physical values of the elements of the adjacent element group identified by the identifying unit 302 are within the allowable range 601. For example, the determining unit 303 selects from the adjacent element group data structure 700 depicted in FIG. 7, adjacent elements 1 record at a time. The selection flag of the selected adjacent element changes from "0" to "1". The determining unit 303 determines whether the physical element of the selected adjacent element is within the allowable range 601 detected by the detecting unit 301.

The adding unit 304 adds to the rendering element group U, adjacent elements for which the physical value thereof has been determined to be within the range. For example, the adding unit 304 adds to the rendering element group U, elements determined by the determining unit 303 to be within the allowable range 601. For example, the adding unit 304 adds to the data structure of an additional element group, adjacent elements for which the physical value thereof has been determined to be within the allowable range 601.

FIG. 8 is a diagram depicting a data structure example of an additional element group. A data structure 800 of an additional element group has fields identical to those configuring the data structure 400 of the rendering element group U and therefore, description will be omitted. An additional element wk is a tetra element that is among an adjacent element group and whose physical value is within the allowable range 601.

Reference of the description returns to FIG. 3. When among an adjacent element group, an element of an element group determined to be outside the allowable range 601 contacts multiple elements in the rendering element group U and the adjacent element group, the adding unit 304 adds the element to the rendering element group U. For example, if an adjacent element (whose physical value is outside the allowable range 601) is surrounded by multiple tetra elements in the rendering element group U post-addition, the adding unit 304 considers the physical value thereof to be within the allowable range 601, and as an additional element, adds the adjacent element to the data structure 800 of the additional element group.

In a simulation generating the heart model 100, by segmentizing the tetra elements, tetra elements whose physical value is outside the allowable range 601 are discretely among the group of the tetra elements whose physical values are within the allowable range 601. Meanwhile, since the afflicted site, such as that of a myocardial infarction, to be viewed by the user has continuity, to guarantee the continuity of the rendering element group U, even if the physical value of an adjacent element is outside the allowable range 601, but the adjacent element contacts multiple tetra elements of the rendering element group U (including added elements), the adjacent element is regarded as an additional element.

Here, contact with the multiple tetra elements includes, for example, contact between faces, contact between edges, and contact between vertices. Definitions of the types of contact with the multiple tetra elements are determined by a setting. Among contact between faces, edges, and vertices, contact sites between faces are the most abundant whereas contact sites between vertices are the fewest. Therefore, concerning contact with the multiple tetra elements, contact with each of the elements only at faces may be considered to be contact with the multiple elements. Further, contact with each of the tetra elements at faces or edges may be considered to be contact with the multiple elements. Contact by any among faces, edges, and vertices may be considered contact with the multiple tetra elements.

The adding unit 304, if an element of the element group determined to be outside the allowable range 601 is within a given distance from at least any one among the multiple elements, adds the element to the rendering element group U. For example, if the distance between the center of gravity of a given tetra element of the element group determined to be outside the allowable range 601 and the center of gravity of at least any one tetra element among contacting elements to be rendered is within a given distance, the adding unit 304 adds to the rendering element group U, the given tetra element of the element group that has been determined to be outside the allowable range 601. In other words, if the given tetra element is a given distance away or more from the multiple tetra elements, the adding unit 304 does not regard the given tetra element as an additional element. Thus, by prescribing a restriction based on a given distance, excessive expansion of the rendering element group U can be controlled and the accuracy of automatically identifying the specified area A can be improved.

In this example, a restriction is assumed where a given element of the element group that has been determined to be outside the allowable range 601 is within a given distance from at least any one element among the multiple elements and therefore, the restriction may be that the given element is with an given distance of each of the multiple elements.

The rendering unit 305 renders a simulation model according to the rendering element group U to which adjacent elements have been added. For example, the rendering unit 305 renders an internal organ model, based on the rendering element group U after the addition by the adding unit 304. For example, the rendering unit 305 renders the rendering element group U. Thus, the user can confirm the 3-dimensional shape of an afflicted site. Further, configuration may be such that the rendering unit 305 renders the heart model 100 and renders the rendering element group U of the heart model 100 depicted with more emphasis. As a result, the user can confirm the extent of the afflicted area in the heart model 100. Further, configuration may be such that the rendering unit 305 renders a remaining element group that is exclusive of the rendering element group U of the heart model 100, whereby the user can confirm the heart model 100 that excludes the afflicted site and/or a border of the afflicted site.

Further, configuration may be such that if the additional element group has become exhausted, the rendering unit 305 renders the internal organ model based in the rendering element group U post-addition. As a result, automatic expansion of the specified area A is suspended. On the other hand, if the additional element group is present, the rendering unit 305 does not yet render the internal organ model. In this case, the identifying unit 302 identifies an adjacent element group that is adjacent to the elements in a tetra element group that is to be added. For example, the identifying unit 302 adds the newly identified adjacent element group to the data structure of the adjacent element group. In this case, the selection flag is set to "0" and therefore, the determining unit 303 and the adding unit 304 perform a determination process and an addition process with respect to the newly identified adjacent element group. Thus, the specified area A can be automatically expanded.

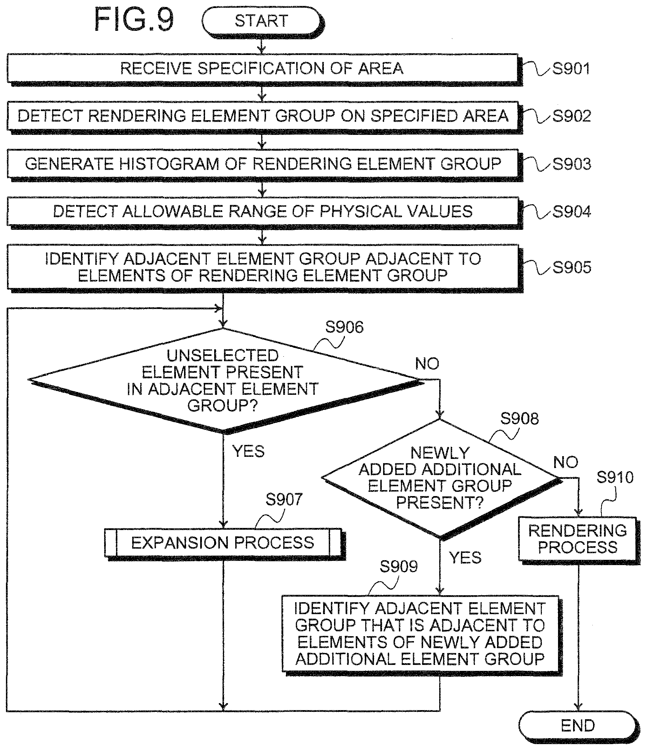

FIG. 9 is a flowchart depicting an example of a rendering process performed by the rendering apparatus 300 according to the embodiment. The rendering apparatus 300 receives via user operation, specification of an area of the heart model 100 (step S901), and detects the rendering element group U on the specified area A (step S902). The rendering apparatus 300 generates the histogram 600 of the physical values of the rendering element group U (step S903), and detects the allowable range 601 of the physical values (step S904).

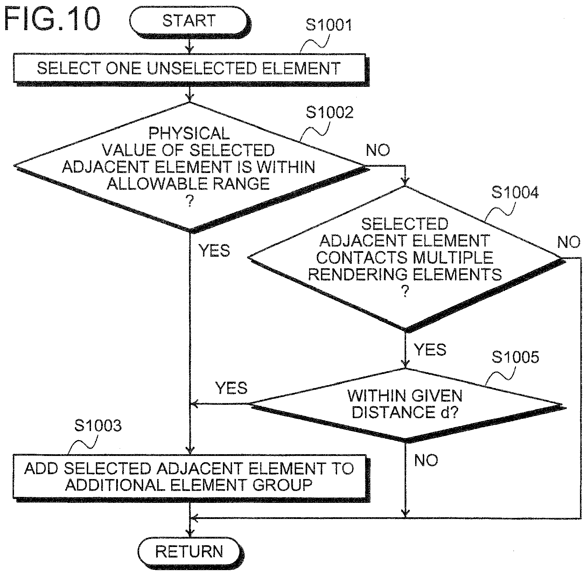

The rendering apparatus 300 identifies an adjacent element group adjacent to elements of the rendering element group U (step S905), and determines whether an unselected element is present in the adjacent element group (step S906). If an unselected element is present (step S906: YES), the rendering apparatus 300 executes an expansion process (step S907), and returns to step S906. Details of the expansion process (step S907) will be described hereinafter with reference to FIG. 10. Thus, for each unselected element, the expansion process (step S907) is executed.

At step S906, if no unselected element is present (step S906: NO), the rendering apparatus 300 determines whether a newly added additional element group is present (step S908). If a newly added additional element group is present (step S908: YES), the rendering apparatus 300 identifies an adjacent element group that is adjacent to the elements of the newly added additional element group (step S909), and returns to step S906. Thus, the rendering apparatus 300 identifies adjacent element groups until no newly added additional element group is obtained and thus, can expand the rendering element group U.

At step S908, if no newly added additional element group is present (step S908: NO), the rendering apparatus 300 executes a rendering process via the rendering unit 305 (step S910). As a result, display of an afflicted area of the heart model 100 can be displayed as depicted in FIG. 1D.

FIG. 10 is a flowchart of an example of the expansion process (step S907) depicted in FIG. 9. The rendering apparatus 300 selects one unselected element from among the adjacent element group (step S1001). In other words, the rendering apparatus 300 selects a tetra element whose selection flag is "0". Herein, the selected adjacent element is referred to as a "selected adjacent element". Through this selection, the selection flag changes from "0" to "1". The rendering apparatus 300 determines whether the physical value of the selected adjacent element is within the allowable range 601 (step S1002). If the physical value is within the allowable range 601 (step S1002: YES), the rendering apparatus 300 adds the selected adjacent element to the data structure of the additional element group (step S1003), and proceeds to step S906. As a result, the selected adjacent element is added to the rendering element group U, enabling the rendering element group U to be expanded.

On the other hand, at step S1002, if the physical value of the selected adjacent element is outside the allowable range 601 (step S1002: NO), the rendering apparatus 300 determines whether the selected adjacent element contacts multiple rendering elements (step S1004). If the selected adjacent element contacts multiple rendering elements (step S1004: YES), the rendering apparatus 300 determines whether the distance between the selected adjacent element and any one of the multiple tetra elements of the specified area A with which contact is made, is within a given distance d (step S1005).

If the distance is within the given distance d (step S1005: YES), the rendering apparatus 300 proceeds to step S1003, and adds the selected adjacent element to the data structure of the additional element group (step S1003). Thus, even if the physical value is outside the allowable range 601, the continuity of the afflicted site can be guaranteed.

At step S1005, if the distance is not within the given distance d (step S1005: NO), the rendering apparatus 300 proceeds to step S906, without adding the selected adjacent element to the data structure of the additional element group. Consequent to the condition of the distance having to be within the given distance d, excessive expansion of the rendering element group U can be suppressed.

Further, at step S1004, if the selected adjacent element does not contact multiple rendering elements (step S1004: NO), the rendering apparatus 300 proceeds to step S906, without adding the selected adjacent element to the data structure of the additional element group, and ends the expansion process (step S907).

In this manner, according to the embodiment, an afflicted site can be easily identified. For example, by merely specifying, as the specified area A, a location to be viewed, the user can automatically expand the rendering elements suitable for the afflicted site without a need for identifying the afflicted area for each patient or each state of one patient.

Further, even if the physical value of the selected adjacent element is outside the allowable range 601, the selected adjacent element can be considered to be a tetra element whose physical value is within the allowable range 601 based on a given condition, thereby enabling the continuity of the afflicted site to be guaranteed. In this case, if the distance to a rendering element is not within a given distance, the tetra element is not considered to be within the allowable range 601 and thus, the rendering apparatus 300 can suppress excessive expansion of the rendering element group U. Consequently, the rendering apparatus 300 can facilitate improved identification accuracy of the specified area A.

Further, when the tetra elements to be added to the rendering elements have been exhausted, the expansion process ends. Thus, by merely specifying the specified area A initially and without having to determine the size of the afflicted site, the user can obtain, as the afflicted site, the rendering element group U that is ultimately expanded, enabling identification of the afflicted site to become more convenient.

The present invention facilitates identification of an afflicted site in an internal organ.

All examples and conditional language provided herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the scope of the invention.

## Claims

1. A rendering program that renders simulation results and causes a computer to execute:
detecting a range of physical values of a rendering element group of elements that are to be rendered and are of an area specified in a simulation model that is a set of elements each having a physical value for each position to be simulated;
identifying from the simulation model, an adjacent element group that is a set of elements adjacent to rendering elements included in the rendering element group;
determining whether the physical value of each adjacent element included in the identified adjacent element group is within the range;
adding to the rendering element group, an adjacent element for which the physical value has been determined to be included in the range, **characterized in that**
the adding includes adding to the rendering element group, an element that contacts multiple elements in the rendering element group, the element being of an element group that is among the adjacent element group and determined to be outside the range; and
rendering the simulation model according to the rendering element group to which the adjacent element has been added.

2. The rendering program according to claim 1, wherein
the identifying the adjacent element group includes newly identifying from the simulation model and as the adjacent element group, a set of elements adjacent to each element of an element group added to the rendering element group.

3. The rendering program according to claims 1 or 2, wherein
the adding includes adding to the rendering element group, an element that is of the element group determined to be outside the range and that is within a given distance from any one of the multiple elements.

4. The rendering program according to any one of claims 1 to 3, wherein
the rendering the simulation model includes rendering an internal organ model, based on the rendering element group post-addition when the element group added to the rendering element group is exhausted.

5. The rendering program according to any one of claims 1 to 4, wherein
the rendering the simulation model includes rendering at least any one among the rendering element group post-addition and a group of elements that remain among elements of the simulation model, excluding the rendering element group post-addition.

6. A rendering method of rendering simulation results and executed by a computer, the rendering method comprising:
detecting a range of physical values of a rendering element group of elements that are to be rendered and are of an area specified in a simulation model that is a set of elements each having a physical value for each position to be simulated;
identifying from the simulation model, an adjacent element group that is a set of elements adjacent to rendering elements included in the rendering element group;
determining whether the physical value of each adjacent element included in the identified adjacent element group is within the range;
adding to the rendering element group, an adjacent element for which the physical value has been determined to be included in the range, **characterized in that**
the adding includes adding to the rendering element group, an element that contacts multiple elements in the rendering element group, the element being of an element group that is among the adjacent element group and determined to be outside the range; and
rendering the simulation model according to the rendering element group to which the adjacent element has been added.

7. A rendering apparatus that renders simulation results, the rendering apparatus comprising:
a detecting unit (301) that detects a range of physical values of a rendering element group of elements that are to be rendered and are of an area specified in a simulation model that is a set of elements each having a physical value for each position to be simulated;
an identifying unit (302) that identifies from the simulation model, an adjacent element group that is a set of elements adjacent to rendering elements included in the rendering element group;
a determining unit (303) that determines whether the physical value of each adjacent element included in the identified adjacent element group is within the range;
an adding unit (304) that adds to the rendering element group, an adjacent element for which the physical value has been determined to be included in the range, **characterized in that** the adding includes adding to the rendering element group, an element that contacts multiple elements in the rendering element group, the element being of an element group that is among the adjacent element group and determined to be outside the range; and
a rendering unit (305) that renders the simulation model according to the rendering element group to which the adjacent element has been added.

## Patentansprüche

1. Wiedergabeprogramm, das Simulationsergebnisse wiedergibt und einen Computer veranlasst, auszuführen:
Detektieren eines Bereichs physikalischer Werte einer Wiedergabeelementgruppe von Elementen, die wiederzugeben sind und zu einem Areal gehören, das in einem Simulationsmodell spezifiziert ist, das ein Satz von Elementen ist, die jeweils einen physikalischen Wert für jede zu simulierende Position aufweisen;
Identifizieren, aus dem Simulationsmodell, einer benachbarten Elementgruppe, die ein Satz von Elementen ist, der Wiedergabeelementen benachbart ist, die in der Wiedergabeelementgruppe eingeschlossen sind;
Bestimmen, ob der physikalische Wert jedes benachbarten Elements, das in der identifizierten benachbarten Elementgruppe eingeschlossen ist, innerhalb des Bereichs liegt;
Hinzufügen zu der Wiedergabeelementgruppe eines benachbarten Elements, für das bestimmt wurde, dass der physikalische Wert im Bereich eingeschlossen ist, **dadurch gekennzeichnet, dass**
das Hinzufügen ein Hinzufügen zu der Wiedergabeelementgruppe eines Elements einschließt, das mehrere Elemente in der Wiedergabeelementgruppe kontaktiert, wobei das Element zu einer Elementgruppe gehört, die zu der benachbarten Elementgruppe zählt und als außerhalb des Bereichs liegend bestimmt wurde; und
Wiedergeben des Simulationsmodells gemäß der Wiedergabeelementgruppe, zu der das benachbarte Element hinzugefügt wurde.

2. Wiedergabeprogramm nach Anspruch 1, wobei
das Identifizieren der benachbarten Elementgruppe ein erneutes Identifizieren aus dem Simulationsmodell und als die benachbarte Elementgruppe eines Satzes von Elementen, die jedem Element einer Elementgruppe benachbart sind, die dem Wiedergabeelement hinzugefügt wurde, einschließt.

3. Wiedergabeprogramm nach Anspruch 1 oder 2, wobei
das Hinzufügen ein Hinzufügen zu der Wiedergabeelementgruppe eines Elements einschließt, das zu der Elementgruppe gehört, die als außerhalb des Bereichs liegend bestimmt wurde und die innerhalb einer gegebenen Distanz zu einem der mehreren Elemente liegt.

4. Wiedergabeprogramm nach einem der Ansprüche 1 bis 3, wobei
das Wiedergeben des Simulationsmodells ein Wiedergeben eines Modells eines inneren Organs basierend auf der Wiedergabeelementgruppe nach Hinzufügen, einschließt, wenn die Elementgruppe, die der Wiedergabeelementgruppe hinzugefügt wurde, erschöpft ist.

5. Wiedergabeprogramm nach einem der Ansprüche 1 bis 4, wobei
das Wiedergeben des Simulationsmodells ein Wiedergeben zumindest einer von der Wiedergabeelementgruppe nach Hinzufügen und einer Gruppe von Elementen, die unter Elementen des Simulationsmodells, ausschließlich der Wiedergabeelementgruppe nach Hinzufügen, bleiben, einschließt.

6. Wiedergabeverfahren zum Wiedergeben von Simulationsergebnissen und das durch einen Computer ausgeführt wird, wobei das Wiedergabeverfahren umfasst:
Detektieren eines Bereichs physikalischer Werte einer Wiedergabeelementgruppe von Elementen, die wiederzugeben sind und zu einem Areal gehören, das in einem Simulationsmodell spezifiziert ist, das ein Satz von Elementen ist, die jeweils einen physikalischen Wert für jede zu simulierende Position aufweisen;
Identifizieren, aus dem Simulationsmodell, einer benachbarten Elementgruppe, die ein Satz von Elementen ist, der Wiedergabeelementen benachbart ist, die in der Wiedergabeelementgruppe eingeschlossen sind;
Bestimmen, ob der physikalische Wert jedes benachbarten Elements, das in der identifizierten benachbarten Elementgruppe eingeschlossen ist, innerhalb des Bereichs liegt;
Hinzufügen zu der Wiedergabeelementgruppe eines benachbarten Elements, für das bestimmt wurde, dass der physikalische Wert im Bereich eingeschlossen ist, **dadurch gekennzeichnet, dass**
das Hinzufügen ein Hinzufügen zu der Wiedergabeelementgruppe eines Elements einschließt, das mehrere Elemente in der Wiedergabeelementgruppe kontaktiert, wobei das Element zu einer Elementgruppe gehört, die zu der benachbarten Elementgruppe zählt und als außerhalb des Bereichs liegend bestimmt wurde; und
Wiedergeben des Simulationsmodells gemäß der Wiedergabeelementgruppe, zu der das benachbarte Element hinzugefügt wurde.

7. Wiedergabeeinrichtung, die Simulationsergebnisse wiedergibt, wobei die Wiedergabeeinrichtung umfasst:
eine Detektionseinheit (301), die einen Bereich physikalischer Werte einer Wiedergabeelementgruppe von Elementen detektiert, die wiederzugeben sind und zu einem Areal gehören, das in einem Simulationsmodell spezifiziert ist, das ein Satz von Elementen ist, die jeweils einen physikalischen Wert für jede zu simulierende Position aufweisen;
eine Identifizierungseinheit (302), die aus dem Simulationsmodell, eine benachbarte Elementgruppe identifiziert, die ein Satz von Elementen ist, der Wiedergabeelementen benachbart ist, die in der Wiedergabeelementgruppe eingeschlossen sind;
eine Bestimmungseinheit (303), die bestimmt, ob der physikalische Wert jedes benachbarten Elements, das in der identifizierten benachbarten Elementgruppe eingeschlossen ist, innerhalb des Bereichs liegt;
eine Hinzufügungseinheit (304), die zu der Wiedergabeelementgruppe ein benachbartes Element hinzufügt, für das bestimmt wurde, dass der physikalische Wert im Bereich eingeschlossen ist, **dadurch gekennzeichnet, dass** das Hinzufügen ein Hinzufügen zu der Wiedergabeelementgruppe eines Elements einschließt, das mehrere Elemente in der Wiedergabeelementgruppe kontaktiert, wobei das Element zu einer Elementgruppe gehört, die zu der benachbarten Elementgruppe zählt und als außerhalb des Bereichs liegend bestimmt wurde; und
eine Wiedergabeeinheit (305), die das Simulationsmodell gemäß der Wiedergabeelementgruppe, zu der das benachbarte Element hinzugefügt wurde, wiedergibt.

## Revendications

1. Programme de rendu qui rend des résultats de simulation et amène un ordinateur à exécuter :
la détection d'une plage de valeurs physiques d'un groupe d'éléments de rendu constitué d'éléments qui doivent être rendus et sont d'une surface spécifiée dans un modèle de simulation qui est un ensemble d'éléments ayant chacun une valeur physique pour chaque position à simuler ;
l'identification à partir du modèle de simulation d'un groupe d'éléments adjacents qui est un ensemble d'éléments adjacents à des éléments de rendu inclus dans le groupe d'éléments de rendu ;
la détermination que la valeur physique de chaque élément adjacent inclus dans le groupe d'éléments adjacents identifié se situe ou non dans la plage ;
l'addition au groupe d'éléments de rendu d'un élément adjacent pour lequel la valeur physique a été déterminée comme étant incluse dans la plage, **caractérisé en ce que**
l'addition comprend l'addition au groupe d'éléments de rendu d'un élément qui vient en contact avec de multiples éléments du groupe d'éléments de rendu, l'élément faisant partie d'un groupe d'éléments qui se situe parmi le groupe d'éléments adjacents et qui est déterminé comme étant à l'extérieur de la plage ; et
le rendu du modèle de simulation selon le groupe d'éléments de rendu auquel l'élément adjacent a été ajouté.

2. Programme de rendu selon la revendication 1, dans lequel
l'identification du groupe d'éléments adjacents comprend la nouvelle identification à partir du modèle de simulation et comme groupe d'éléments adjacents d'un ensemble d'éléments adjacents à chaque élément d'un groupe d'éléments ajouté au groupe d'éléments de rendu.

3. Programme de rendu selon les revendications 1 ou 2, dans lequel
l'addition comprend l'addition au groupe d'éléments de rendu d'un élément qui appartient au groupe d'éléments déterminé comme étant à l'extérieur de la plage et qui se situe dans une distance donnée à partir de l'un quelconque des multiples éléments.

4. Programme de rendu selon l'une quelconque des revendications 1 à 3, dans lequel
le rendu du modèle de simulation comprend le rendu d'un modèle d'organe interne sur la base du groupe d'éléments de rendu post-addition lorsque le groupe d'éléments ajouté au groupe d'éléments de rendu est épuisé.

5. Programme de rendu selon l'une quelconque des revendications 1 à 4, dans lequel
le rendu du modèle de simulation comprend le rendu d'au moins l'un quelconque parmi le groupe d'éléments de rendu post-addition et un groupe d'éléments qui restent parmi les éléments du modèle de simulation, à l'exclusion du groupe d'éléments de rendu post-addition.

6. Procédé de rendu pour rendre des résultats de simulation et exécuté par un ordinateur, le procédé de rendu comprenant :
la détection d'une plage de valeurs physiques d'un groupe d'éléments de rendu constitué d'éléments qui doivent être rendus et sont d'une surface spécifiée dans un modèle de simulation qui est un ensemble d'éléments ayant chacun une valeur physique pour chaque position à simuler ;
l'identification à partir du modèle de simulation d'un groupe d'éléments adjacents qui est un ensemble d'éléments adjacents à des éléments de rendu inclus dans le groupe d'éléments de rendu ;
la détermination que la valeur physique de chaque élément adjacent inclus dans le groupe d'éléments adjacents identifié se situe ou non dans la plage ;
l'addition au groupe d'éléments de rendu d'un élément adjacent pour lequel la valeur physique a été déterminée comme étant incluse dans la plage, **caractérisé en ce que** :
l'addition comprend l'addition au groupe d'éléments de rendu d'un élément qui vient en contact avec de multiples éléments du groupe d'éléments de rendu, l'élément faisant partie d'un groupe d'éléments qui se situe parmi le groupe d'éléments adjacents et étant déterminé comme étant à l'extérieur de la plage ; et
le rendu du modèle de simulation selon le groupe d'éléments de rendu auquel l'élément adjacent a été ajouté.

7. Appareil de rendu qui rend des résultats de simulation, l'appareil de rendu comprenant :
une unité de détection (301) qui détecte une plage de valeurs physiques d'un groupe d'éléments de rendu constitué d'éléments qui doivent être rendus et sont d'une surface spécifiée dans un modèle de simulation qui est un ensemble d'éléments ayant chacun une valeur physique pour chaque position à simuler ;
une unité d'identification (302) qui identifie à partir du modèle de simulation un groupe d'éléments adjacents qui est un ensemble d'éléments adjacents aux éléments de rendu inclus dans le groupe d'éléments de rendu ;
une unité de détermination (303) qui détermine si la valeur physique de chaque élément adjacent inclus dans le groupe d'éléments adjacents identifié se situe dans la plage ;
une unité d'addition (304) qui ajoute au groupe d'éléments de rendu un élément adjacent pour lequel la valeur physique a été déterminée comme étant incluse dans la plage, **caractérisé en ce que** l'addition comprend l'addition au groupe d'éléments de rendu d'un élément qui vient en contact avec de multiples éléments du groupe d'éléments de rendu, l'élément faisant partie d'un groupe d'éléments qui se situe parmi le groupe d'éléments adjacents et étant déterminé comme étant à l'extérieur de la plage ; et
une unité de rendu (305) qui rend le modèle de simulation selon le groupe d'éléments de rendu auquel l'élément adjacent a été ajouté.
